**Europäisches Patentamt**

**European Patent Office**

**Office européen des brevets**

(11) Veröffentlichungsnummer : **0 370 249 B1**

(12) **EUROPÄISCHE PATENTSCHRIFT**

(45) Veröffentlichungstag der Patentschrift :
06.05.92 Patentblatt 92/19

(51) Int. Cl.⁵ : **B60J 7/08**

(21) Anmeldenummer : **89119707.1**

(22) Anmeldetag : **24.10.89**

(54) **Ausstellbares Dachteil für Kraftwagen.**

(30) Priorität : **22.11.88 DE 3839403**

(43) Veröffentlichungstag der Anmeldung :
**30.05.90 Patentblatt 90/22**

(45) Bekanntmachung des Hinweises auf die
Patenterteilung :
**06.05.92 Patentblatt 92/19**

(84) Benannte Vertragsstaaten :
**AT BE DE ES FR GB IT NL SE**

(56) Entgegenhaltungen :
**BE-A- 657 393**
**GB-A- 2 164 006**
**US-A- 3 720 440**

(73) Patentinhaber : **GABEL GMBH**
**Carl-vom-Hagen-Str. 11**
**W-5830 Schwelm (DE)**

(72) Erfinder : **Schürmann, Erich, Prof. Dr.-Ing.**
**Wittenberg 1**
**W-4415 Sendenhorst (DE)**

(74) Vertreter : **Ostriga, Harald, Dipl.-Ing. et al**
**Patentanwälte Dipl.-Ing. Harald Ostriga**
**Dipl.-Ing. Bernd Sonnet Stresemannstrasse**
**6-8**
**W-5600 Wuppertal 2 (DE)**

## Beschreibung

Die Erfindung betrifft ein ausstellbares Dachteil für Kraftwagen, insbesondere lichtdurchlässiges Sonnendach mit einer Dachscheibe aus Glas od.dgl.

Ein solches ausstellbares Dachteil ist durch die EP-A- 59 859 bekanntgeworden.

Bei dem bekannten ausstellbaren Dachteil sind an dem in Fahrtrichtung gelegenen ersten Außenrand der Dachscheibe zwei voneinander distanzierte Befestigungsgelenke vorgesehen, welche spiegelsymmetrisch zu der in Fahrtrichtung verlaufenden Flächen-Mittellinie der Dachscheibe angeordnet sind. Auf der Flächen-Mittellinie am zweiten bzw. in Fahrtrichtung hinteren Außenrand der Dachscheibe ist ein Dachscheibenverschluß, im vorliegenden Falle ein Kniehebel-Verschluß, angeordnet.

Die Dachscheibe des bekannten Dachteils ist konvex nach außen vorgebogen. Um eine gleichmäßige zug- und wasserdichte Anlage der Dachscheibe an dem die Dachteilöffnung umrahmenden Dichtungskeder zu erzielen, muß der ausstellbare Dachscheibenverschluß in seiner Schließstellung eine große Schließkraft aufbringen. Diese muß so groß sein, daß sich die Dachscheibe in ihrer Schließlage unter elastischer Verformung abflacht.

Ausgehend von dem bekannten ausstellbaren Dachteil (EP-A- 59 859), liegt der Erfindung die Aufgabe zugrunde, ein solches in vorteilhafter Weise zug- und wasserdicht schließendes Dachteil so auszugestalten, daß die Schließkraft mit einem geringeren Bauaufwand noch wirkungsvoller eingeleitet werden kann. Diese Aufgabe ist entsprechend dem Kennzeichenteil des Patentanspruchs 1 gelöst worden.

Das durch die EP-A- 59 859 vorbekannte Dachteil weist zwei Befestigungsgelenke und einen Dachscheibenverschluß, also drei Baugruppen, auf. Das erfindungsgemäße Dachteil weist hingegen nur ein Befestigungsgelenk - und mit diesem auf derselben Flächen-Mittellinie - den Dachscheibenverschluß, also nur zwei Baugruppen, auf. Dadurch, daß die Schließkraft über die Flächen-Mittellinie der Dachscheibe eingeleitet wird, ergibt sich - im Unterschied zum vorbezeichneten Stand der Technik - eine ideale gleichmäßige Verteilung der Schließkraft auf die Schließfuge, also eine gleichmäßige Druckanlage zwischen Dachscheiben-Innenrand und Dichtungskeder. Beim erfindungsgemäßen Dachteil ist somit in jedem Falle eine indifferente Druckanlagezone, welche sich in der Schließfuge zwischen den beiden voneinander distanzierten Befestigungsgelenken ergeben könnte, vermieden.

Entsprechend weiteren Erfindungsmerkmalen kann die Schließkraft vom Dachscheibenverschluß über die Dachscheibe in das Befestigungsgelenk besonders günstig dadurch übertragen werden, daß auf der Innenfläche der Dachscheibe eine langgestreckte Strebe aus Flachmaterial befestigt ist, deren einer Endbereich das Befestigungsgelenk und deren anderer Endbereich den Dachscheibenverschluß trägt. Obwohl diese Strebe grundsätzlich ein- oder mehrteilig, wie z.B. längs- oder quergeteilt sein kann, ist eine einstückige Strebe besonders vorteilhaft. Die beiden Baugruppen (Befestigungsgelenk und Dachscheibenverschluß) können auf der einstückigen Strebe vormontiert, also zu einer Baugruppe zusammengefaßt sein.

In weiterer Ausgestaltung der Erfindung ist die Strebe mit der Innenfläche der Dachscheibe verklebt. Eine solche Verklebung kann ausschließlich oder in Verbindung mit zusätzlichen Befestigungsmitteln (z.B. Befestigungsschrauben) erfolgen. Eine ausschließliche Klebeverbindung gestattet den besonderen Vorteil einer homogenen Außenansicht, die durch keine Befestigungselemente, wie z.B. durch Schraubköpfe, gestört ist.

Zweckmäßig besteht die Strebe werkstoffeinheitlich aus Flachbandmaterial, wie z.B. aus Kunststoff oder aus Metall, insbesondere aus Leichtmetall- oder aus Stahlblech.

In weiterer Ausgestaltung der Erfindung weist die Strebe entlang ihrer Längserstreckung abwechselnd aufeinanderfolgende Zonen unterschiedlicher Biegesteifigkeit auf.

Insbesondere sind die biegesteifen Zonen durch von der Dachscheibe weg nach innen vorspringende Längssicken und die biegeweichen Zonen durch unverformte oder geschwächte (also ausgedünnte oder gelochte) Bereiche der Strebe gebildet. Diese Merkmale sind bei einer Verklebung der Strebe mit der Dachinnenfläche wichtig. Für den Fall nämlich, daß sich die Klebestelle benachbart dem Dachscheibenverschluß lösen sollte, ist gewährleistet, daß sich die Klebestelle nicht auf gesamter Länge ablöst, sondern nur auf einem anfänglichen Bereich bis zur nächsten biegeweichen Zone, welche die Lösekräfte aufnehmen kann. In einem solchen Falle kann die Funktion der Dachscheibe weitestgehend aufrechterhalten werden, zumindest so lange, bis die nächste Reparaturmöglichkeit besteht.

Entsprechend einem bevorzugten Ausführungsbeispiel ist jeder Endbereich der Strebe mit einer sich am Rand der Strebe U-förmig erstreckenden Sicke versehen, wobei mindestens eine im mittleren Bereich der Strebe randlich angeordnete Längssicke an ihren beiden Stirnenden einem ungesickten oder geschwächten, also biegeweichen, Strebenbereich benachbart ist. In allen Fällen hat es sich als zweckmäßig herausgestellt, die Strebe entlang ihrer Längsmittelachse spiegelsymmetrisch auszubilden.

In den Zeichnungen ist ein bevorzugtes Ausführungsbeispiel entsprechend der Erfindung näher dargestellt, es zeigen:

Fig. 1 eine mehr schematische Draufsicht auf ein isoliert gezeigtes, ausstellbares Dachteil,

Fig. 2 ein gemäß II in Fig. 1 gekennzeichnetes Detail in einer gegenüber Fig. 1 vergrößerten Darstellung, nämlich eine Strebe in Alleinstellung und

Fig. 3 eine Schnittansicht des geschlossenen Dachteils entsprechend der in Fig. 1 eingetragenen und mit III-III bezeichneten Schnittlinie.

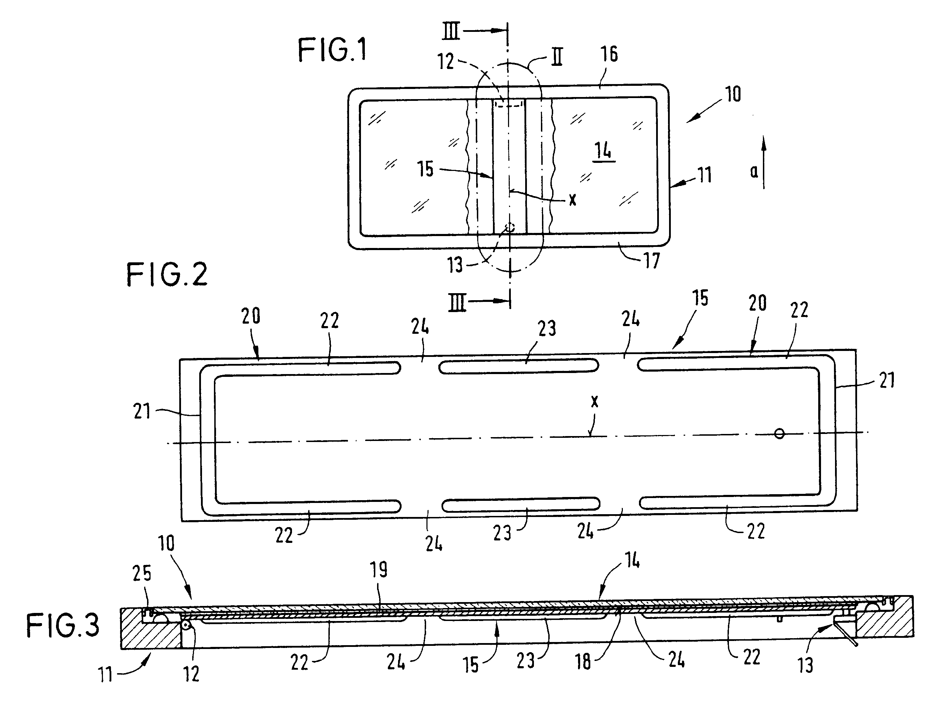

Das ausstellbare Dachteil für Kraftwagen ist in Fig. 1 insgesamt mit 10 bezeichnet. Innerhalb des im Fahrzeugdach befestigten ein- oder mehrteiligen Dachrahmens 11 ist eine Dachscheibe 14, zweckmäßig aus durchsichtigem Werkstoff, wie z.B. aus Glas oder Polycarbonat, gehalten. Zur Halterung der Dachscheibe 14 sind zum einen ein in Fig. 1 gestrichelt dargestelltes Befestigungs gelenk 12 und zum anderen ein ebenfalls gestrichelt angedeuteter Dachscheibenverschluß 13 vorgesehen (s.a. Fig. 3). Befestigungsgelenk 12 und Dachscheibenverschluß 13 sind spiegelsymmetrisch zu einer gemeinsamen mit x bezeichneten Mittellinie der Dachscheibe 14 auf einer Flachstrebe 15 befestigt. Die Fahrtrichtung des das Dachteil 10 tragenden nicht dargestellten Fahrzeuges ist mit a angegeben.

Der erste bzw. in Fahrtrichtung a vordere Außenrand der Dachscheibe 14 ist mit 16 bezeichnet, während der zweite, hintere Außenrand der Dachscheibe 14 mit der Bezugsziffer 17 versehen ist.

Die Strebe 15 besteht beim gezeigten Ausführungsbeispiel aus Stahl oder Leichtmetallflachband, welches mit der Innenfläche 18 der Dachscheibe 14 vollflächig über eine Klebeschicht 19 verbunden ist.

Jeder Endbereich der Strebe 15 ist mit einer sich am Rand der Strebe befindlichen U-förmigen Sicke 20 versehen, welche aus einer Quersicke 21 und aus einer Längssicke 22 besteht. Im mittleren Bereich der Strebe 15 sind - einander diametral gegenüberliegend - zwei weitere Längssicken 23 vorgesehen. Alle Sicken 20-23 sind von der Dachscheibe 14 weg nach innen konvex vorgewölbt.

Jeweils zwischen den Längssicken 22 und einer mittleren Längssicke 23 weist die Strebe 15 je einen ungesickten - also verhältnismäßig biegeweichen - Strebenbereich 24 auf. Die Bereiche 24 können zusätzlich durch Lochungen oder durch quer zur Achse x verlaufende Prägungen geschwächt sein. Der Sinn dieser biegeweichen Schwächungsstellen 24 ist weiter oben beschrieben.

In Fig. 3 ist der dachrahmenseitige umlaufende Dichtungskeder mit 25 bezeichnet. Der Dachscheibenverschluß 13 (Kniehebelverschluß) ist nur schemahaft dargestellt.

## Patentansprüche

1. Ausstellbares Dachteil für Kraftwagen, insbesondere lichtdurchlässiges Sonnendach mit einer Dachscheibe aus Glas o.dgl., mit mindestens einem die Dachscheibe bezüglich des fahrzeugfesten Dachrahmens haltenden, an einem ersten Außenrand innen an der Dachscheibe befestigten Befestigungsgelenk sowie mit einem ausstellbaren Dachscheibenverschluß, welcher an einem dem ersten Außenrand gegenüberliegenden zweiten Außenrand mittig angeordnet und innen an der Dachscheibe befestigt ist, gekennzeichnet durch nur ein Befestigungsgelenk (12), welches gemeinsam mit dem Dachscheibenverschluß (13) auf derselben Flächen-Mittellinie (x) der Dachscheibe (14) angeordnet und befestigt ist.

2. Ausstellbares Dachteil nach Anspruch 1, dadurch gekennzeichnet, daß auf der Innenfläche (18) der Dachscheibe (14) eine langgestreckte Strebe (15) aus Flachmaterial befestigt ist, deren einer Endbereich das Befestigungsgelenk (12) und deren anderer Endbereich den Dachscheiben-Verschluß (13) trägt.

3. Ausstellbares Dachteil nach Anspruch 2, dadurch gekennzeichnet, daß die Strebe (15) ein- oder mehrteilig, wie z.B. längs- oder quergeteilt, ist.

4. Ausstellbares Dachteil nach Anspruch 2 oder nach Anspruch 3, dadurch gekennzeichnet, daß die Strebe (15) mit der Innenfläche (18) der Dachscheibe (14) verklebt ist.

5. Ausstellbares Dachteil nach den Ansprüchen 2 bis 4, dadurch gekennzeichnet, daß die Strebe (15) aus homogenem Flachbandmaterial, wie z.B. aus Kunststoff oder aus Metall, insbesondere aus Leichtmetall oder aus Stahlblech, besteht.

6. Ausstellbares Dachteil nach einem der vorangehenden Ansprüche, insbesondere nach Anspruch 4, dadurch gekennzeichnet, daß die Strebe (15) entlang ihrer Längserstreckung abwechselnd aufeinanderfolgende Zonen (22, 23; 24) unterschiedlicher Biegesteifigkeit aufweist.

7. Ausstellbares Dachteil nach Anspruch 6, dadurch gekennzeichnet, daß biegesteife Zonen durch von der Dachscheibe (14) weg nach innen vorspringende Längssicken (22, 23) und biegeweiche Zonen durch unverformte oder geschwächte Bereiche (24) der Strebe (15) gebildet sind.

8. Ausstellbares Dachteil nach Anspruch 7, dadurch gekennzeichnet, daß jeder Endbereich der Strebe (15) mit einer sich am Rand der Strebe (15) U-förmig erstreckenden Sicke (20) versehen ist, wobei mindestens eine im mittleren Bereich der Strebe (15) randlich angeordnete Längssicke (23) an ihren beiden Stirnenden einem ungesickten biegeweichen Strebenbereich (24) benachbart ist.

9. Ausstellbares Dachteil nach einem der vorangehenden Ansprüche, <u>dadurch gekennzeichnet</u>, daß die Strebe (15) entlang ihrer Längsmittelachse (x) spiegelsymmetrisch ausgebildet ist.

## Claims

1. Outwardly displaceable roof section for motor vehicles, in particular a transparent sunroof with a roof pane made of glass or the like, having at least one fastening joint which holds the roof pane relative to the vehicle-fixed roof frame and is fastened at a first outer edge to the inside of the roof pane, as well as having an outwardly displaceable roof pane closure which is disposed centrally at a second outer edge lying opposite the first outer edge and is fastened to the inside of the roof pane, <u>characterized by</u> only one fastening joint (12) which is disposed and fastened jointly with the roof pane closure (13) on the same surface centre line (x) of the roof pane (14).

2. Outwardly displaceable roof section according to claim 1, <u>characterized in that</u> there is fastened on the inner surface (18) of the roof pane (14) an elongated strut (15) made of flat material, of which one end zone carries the fastening joint (12) and the other end zone carries the roof pane closure (13).

3. Outwardly displaceable roof section according to claim 2, <u>characterized in that</u> the strut (15) comprises a single piece or a plurality of pieces as a result of being, for example, longitudinally or transversely divided.

4. Outwardly displaceable roof section according to claim 2 or claim 3, <u>characterized in that</u> the strut (15) is glued to the inner surface (18) of the roof pane (14).

5. Outwardly displaceable roof section according to claims 2 to 4, <u>characterized in that</u> the strut (15) is made of homogeneous flat strip material such as, for example, plastic or metal, in particular light sheet metal or sheet steel.

6. Outwardly displaceable roof section according to one of the preceding claims, in particular according to claim 4, <u>characterized in that</u> the strut (15) has successive zones (22, 23; 24) of differing flexural strength alternating along its longitudinal extension.

7. Outwardly displaceable roof section according to claim 6, <u>characterized in that</u> rigid zones are formed by longitudinal beads (22, 23) which project inwards away from the roof pane (14) and flexible zones are formed by undeformed or weakened zones (24) of the strut (15).

8. Outwardly displaceable roof section according to claim 7, <u>characterized in that</u> each end zone of the strut (15) is provided with a bead (20) which extends in a U-shape along the edge of the strut (15), with at least one longitudinal bead (23), which is disposed on the edge in the central zone of the strut (15), having its two front ends adjacent to an unbeaded flexible strut zone (24).

9. Outwardly displaceable roof section according to one of the preceding claims, <u>characterized in that</u> the strut (15) is constructed in a mirror-symmetrical fashion along its longitudinal centre line (x).

## Revendications

1. Elément de toit déployable pour véhicules à moteur, en particulier toit ouvrant translucide avec une verrière en verre dans le toit ou similaire, avec au moins une articulation à fixation qui retient la verrière dans le toit par rapport au cadre du toit solidaire du véhicule et est fixée à un premier rebord extérieur à l'intérieur de la verrière dans le toit, ainsi qu'avec une fermeture déployable de verrière dans le toit qui est fixée à un second rebord extérieur situé sur le côté opposé au premier rebord extérieur au milieu sur la face intérieure de la verrière dans le toit, caractérisé par une unique articulation (12) à fixation qui est disposée et fixée conjointement à la fermeture (13) de la verrière dans le toit sur la même ligne médiane (x) de la surface de la verrière (14) dans le toit.

2. Elément de toit déployable suivant la revendication 1, caractérisé par le fait que sur la surface intérieure (18) de la verrière (14) dans le toit est fixée une entretoise (15) allongée en un matériau plat dont l'une des extrémités porte l'articulation (12) à fixation et l'autre extrémité la fermeture (13) de la verrière dans le toit.

3. Elément de toit déployable suivant la revendication 2, caractérisé par le fait que l'entretoise (15) est en une seule ou en plusieurs parties, c'est-à-dire divisée dans le sens longitudinal ou transversal.

4. Elément de toit déployable suivant la revendication 2 ou suivant la revendication 3, caractérisé par le fait que l'entretoise (15) est collée avec la face intérieure (18) de la verrière (14) dans le toit.

5. Elément de toit déployable suivant les revendications 2 à 4, caractérisé par le fait que l'entretoise (15) est composée d'un matériau plat homogène en ruban, tel que par exemple en matière plastique ou en métal, en particulier en alliage léger ou en tôle d'acier.

6. Elément de toit déployable suivant l'une des revendications précédentes, caractérisé par le fait que l'entretoise (15) présente en alternance le long de son extension longitudinale des zones (22, 23, 24) se succédant et présentant une rigidité variable à la flexion.

7. Elément de toit déployable suivant la revendication 6, caractérisé par le fait que les zones de rigidité à la flexion sont formées par des moulures (22, 23) longitudinales faisant saillie depuis la verrière (14) dans le toit vers l'intérieur, et les zones de souplesse à la flexion par des secteurs (24) non-déformés ou affaiblis de l'entretoise (15).

8. Elément de toit déployable suivant la revendication 7, caractérisé par le fait que chacune des extrémités de l'entretoise (15) est pourvue d'une moulure (20) s'étendant en forme de U à la bordure de l'entretoise (15), tandis qu'au moins une moulure (23) longitudinale prévue en bordure dans la zone centrale de l'entretoise (15) avoisine par chacune de ses extrémités frontales un secteur (24) d'entretoise non-mouluré, souple à la flexion.

9. Elément de toit déployable suivant l'une des revendications qui précèdent, caractérisé par le fait que l'entretoise (15) a une configuration énantiomorphe par rapport à son axe (x) médian longitudinal.

FIG.1

FIG.2

FIG.3

EP 0 370 249 B1